(19) 

Europäisches
Patentamt
European
Patent Office
Office européen
des brevets

(11) **EP 2 103 797 A2**

(12) **EUROPEAN PATENT APPLICATION**

(43) Date of publication:
**23.09.2009 Bulletin 2009/39**

(21) Application number: **09250348.1**

(22) Date of filing: **12.02.2009**

(51) Int Cl.:
***F02D 19/02*** *(2006.01)*

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **19.03.2008 JP 2008071816**

(71) Applicant: **Nikki Co., Ltd.
Kanagawa-ken 243-0801 (JP)**

(72) Inventors:
• **Sawut, Umerujan
Atsugi-shi,
Kanagawa-ken 243-0801 (JP)**

• **Takigawa, Buso
Atsugi-shi,
Kanagawa-ken 243-0801 (JP)**
• **Tohti, Gheyret
Atsugi-shi,
Kanagawa-ken 243-0801 (JP)**

(74) Representative: **Merrifield, Sarah Elizabeth
Boult Wade Tennant
Verulam Gardens
70 Gray's Inn Road
London WC1X 8BT (GB)**

(54) **Fuel injection pressure control method in liquefied fuel engine**

(57)    This invention provided a variable target fuel injection pressure control method in a liquefied fuel engine (1) including a fuel supply pipe (9B) extending from a fuel tank (2) and having an injector (8) on the distal side thereof, a fuel pump (13) disposed in the fuel supply pipe (9B), and an electronic control unit (10) which controls driving of the injector (8) and the fuel pump (3), and which pressurizes a liquefied gas fuel stored in the fuel tank (2) by a fuel pump (3) to feed the gas fuel to the injector (8) via the fuel supply pipe (9B) and supply the gas fuel to the engine (1). Here, the method includes creating a numerical formula model showing a physical relationship of the fuel supply device obtained from values of an engine rotation number and an intake air pressure that are actual measurement values by various sensors annexed to the fuel supply device.

FIG.1

EP 2 103 797 A2

## Description

Detailed Description of the Invention

Technical Field

The present invention relates to a fuel injection pressure control method in a liquefied fuel engine which forcibly feeds a liquid fuel, which is apt to vaporize compared with gasoline, like LPG or DME, from a fuel tank to an injector in a liquid state, and injects and supplies the liquid fuel to the engine.

A fuel injection control type engine system which measures and injects a liquid fuel, which vaporizes more easily than gasoline, like LPG or DME by an injector, and supplies the liquid fuel to an engine in a liquid state is well known. This system is mounted on an automobile, etc. In recent years, requests for environmental measures, low fuel consumption, low exhaust gas, energy saving, etc. are strong, and especially, a fuel injection control has a great influence on engine control performance and exhaust air. Therefore, energy saving, high speed, high precision, etc. are desired strongly.

Meanwhile, in the conventional fuel injection control type engine system, in order to be able to cope with all operation conditions, the fuel injection pressure is always controlled at constant high pressure irrespective of the magnitude of the fuel injection amount. Therefore, in an engine load state where the injection amount from an injector is extremely large, the number of rotations of a fuel pump driving motor becomes high, and the load of the motor increases, and a large electric current flows into the motor. As a result, fuel is consumed too much. Additionally, since a large electric current flows into the fuel pump driving motor over a long time, there is a problem in that the temperature of the motor or motor driver rises, and durability deteriorates.

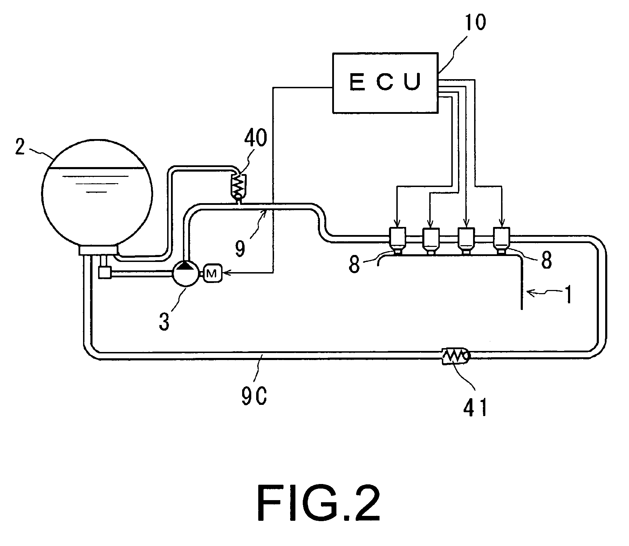

Thus, as shown in FIG. 2, a return type fuel supply system is known in which a constant amount of liquefied gas fuel stored in a fuel tank 2 is forcibly fed to a fuel supply pipe 9 by an electrically-operated fuel pump 3 driven by a DC motor or the like, the fuel is supplied at a flow rated required by an engine from an injector 8 via the fuel supply pipe 9 after pressure is constantly adjusted by a relief valve 40, and an surplus fuel is returned to the fuel tank 2 via a pressure regulator 41 by a fuel return pipe 9C.

In such a conventional fuel supply system, in order to be able to cope with all engine operation conditions, the discharge flow rate of the electrically-operated fuel pump 3 is set to be greater than or equal to a maximum injection amount of fuel ejected from the injector 8. However, since delivered fuel returns to the fuel tank 2 from the pressure regulator 41, for example, in a situation where the fuel injection amount from the injectors 8 is extremely small during idling, fuel cut, etc., the energy given to the electrically-operated fuel pump 3 will be consumed wastefully. Additionally, when a surplus fuel whose temperature has become high through the vicinity of the engine 1 is returned to the fuel tank 2 in large quantities, the fuel temperature within the tank will be raised, fuel vapor will be generated, and the discharge amount of the pump will become unstable, which exerts an adverse effect on exhaust air.

Thus, as described in Japanese Patent Application Laid-Open Nos. 7-54725, 2001-234829, 2003-232234, etc., a method of adopting a two-stage switching type of switching the discharge amount of an electrically-operated fuel pump to two stages for normal operation and for a high zone, thereby reducing power consumption and return of surplus fuel to a fuel tank is carried out. However, in such a fuel pump control, it is impossible to exactly cope with a required fuel flow rate suitable for an engine operating state. Therefore, the surplus fuel cannot be reduced sufficiently, and wasteful power consumption cannot be reduced sufficiently. Additionally, in the case of the return type or the two-stage switching type, a control device and a control method become complicated, manufacture is not easy, and price becomes high. In addition, the above type is disadvantageous even in terms of maintenance or repair.

Technical Problem

The invention is intended to solve the above problems, and an object of the invention is to provide a fuel injection pressure control method in a liquefied fuel engine including an injector extending from a fuel tank and annexed to the engine on the distal side of a fuel supply pipe, a fuel pump disposed in the fuel supply pipe, and an electronic control unit which controls driving of the fuel pump driving motor and the injector, and which controls a required fuel injection pressure according to a fuel injection amount corresponding to all operation conditions, thereby preventing deterioration of fuel consumption caused by an increase in load in the motor by wasteful high rotation of the fuel pump driving motor that is a conventional problem in control at high pressure or a rise in temperature in the motor or motor driver to improve durability.

Means for Solving the Problems

In order to achieve the above object, the invention provided a variable target fuel injection pressure control method in a liquefied fuel engine including a fuel supply pipe extending from a fuel tank and having an injector on the distal side thereof, a fuel pump disposed in the fuel supply pipe, and an electronic control unit which controls driving of the injector and the fuel pump, and which pressurizes a liquefied gas fuel stored in the fuel tank by a fuel pump to feed the gas fuel to the injector via the fuel supply pipe and supply the gas fuel to the engine. Here, the method includes creating a numerical formula model showing a physical relationship of the fuel supply device obtained from values of an engine rotation number and an intake air pressure that are actual measurement values by various sensors annexed to the fuel supply device, estimating system parameters on operating states which cannot be actually measured, by using the created numerical formula model, performing simulation on the basis of the numerical formula model to determine optimal control parameters, and determining a fuel injection pressure required according to a fuel injection amount required by the engine which is obtained in the electronic control unit provided in the fuel supply device by using the determined control parameters.

It is possible to control the fuel injection pressure such that the fuel injection pressure becomes a target pressure in all operation conditions. Hence, when fuel injection amount is extremely small, fuel is apt to vaporize. Thus, when the fuel injection pressure is set high, and the fuel injection amount is large, the fuel is not susceptible to vaporization. Thus, it is possible to perform a theoretical control that it is not necessary to set the fuel injection to a high value. Hence, the power consumption of a pump driving electric motor which drives a fuel pump is suppressed, and the durability of the pump driving motor and motor driver is improved.

Additionally, a probability that the fuel injection pressure changes and operational characteristics of the injector, etc. exert a bad effect on exhaust air is eliminated by correcting the fuel injection time according to the fuel injection pressure.

In addition, the following relational expression (1) determined by an engine rotation number and an intake air pressure is included in the numerical formula model for obtaining a target fuel injection pressure in the invention.

$$P_d = f(N, P) \qquad (1)$$

(where $P_d$ is a target fuel injection pressure, $N$ is an engine rotation number, and $P$ is an intake air pressure)

Further, in the invention, the following relational expressions (2) and (3) are used when correction of a fuel injection time is performed automatically according to the target fuel injection pressure.

$$T_h = f(P_d) \qquad (2)$$

$$T_i = f(T_p, T_h) \qquad (3)$$

(where $T_h$ is a fuel injection amount correction time, $T_i$ is a final fuel injection time, $T_p$ is a basic fuel injection time, and $P_d$ is a target fuel injection pressure)

Advantage of the Invention

According to the invention, it is possible to lower manufacture price or maintenance cost without necessitating a complicated configuration including a return type or a plurality of fuel systems. Particularly by controlling a required fuel injection pressure according to a fuel injection amount in all operation conditions, it is possible to prevent deterioration of fuel consumption caused by an increase in load in the motor by wasteful high rotation of a fuel pump driving motor or a rise in temperature in the motor or motor driver to improve durability, and it is possible to obtain good exhaust air.

Brief Description of the Drawings

FIG. 1 is a layout drawing illustrating a liquefied fuel engine for carrying out an embodiment of the invention.
FIG. 2 is a layout drawing illustrating a conventional example.

Best Mode for Carrying Out the Invention

Hereinafter, best modes for carrying out the invention will be described in detail.

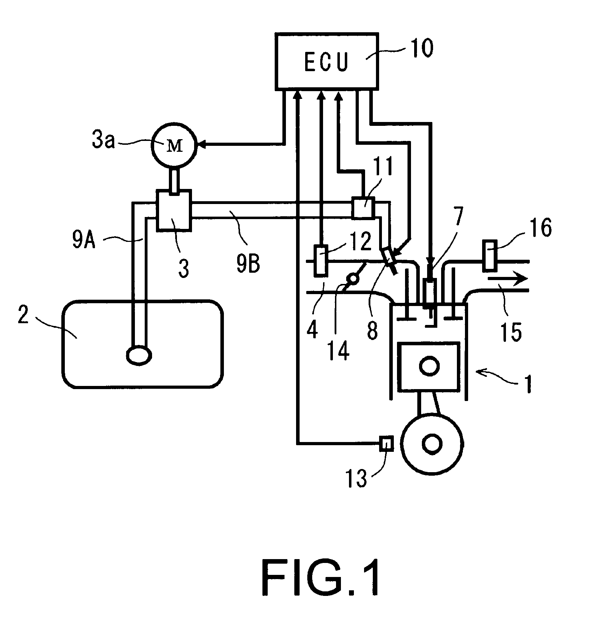

FIG. 1 illustrates a layout drawing of a liquefied fuel engine for carrying out a fuel injection pressure control method according to the present invention. Referring to this drawing, a return-less type fuel supply system is constructed such that a fuel pump 3 driven by an electric motor 3a is disposed near an outlet of a fuel delivery pipe 9A which extends from a fuel tank 2, a distal side of a fuel supply pipe 9B which extends by way of a fuel pressure sensor 11 from the fuel pump 3 is connected to an injector 8 disposed in an intake pipe 4 of an engine 1, and a fuel return pipe is not provided on the downstream side of the injector 8.

Additionally, the electric motor 3a which drives the fuel pump 3, the injector 8, and an ignition plug 7 are electrically connected to an electronic control unit (ECU) 10, respectively, and their respective driving is controlled according to operating states of the engine 1. Moreover, the fuel pressure sensor 11 which detects fuel pressure is arranged before the injector 8 in the fuel supply pipe 9B on the downstream side of the fuel pump 3, and a crank angle sensor 13 which detects an engine rotation number is arranged in the engine 1. Detection signals outputted from these sensors, respectively, are sent to the electronic control unit 10. Then, the electronic control unit 10 determines a fuel injection pressure required according to a fuel injection amount required by the engine, and controls the electric motor 3a, the injector 8, the ignition plug 7, etc.

In addition, reference numeral 12 in FIG. 1 represents an intake pressure sensor arranged in the intake pipe 4, reference numeral 14 represents an opening and closing valve arranged in the intake pipe 4, and reference numeral 16 represents an oxygen gas sensor arranged in an exhaust pipe 15.

In order to perform a fuel injection pressure control according to this embodiment, first, the engine 1 that is the present embodiment is started, and a numerical formula model showing a physical relationship of a fuel supply device obtained from a plurality of kinds of data, such as an intake air pressure within the intake pipe 4 from the intake pressure sensor 12 arranged in the intake pipe 4, and an engine rotation number from the crank angle sensor 13 is created.

The following relational expression (1) shows a numerical formula model showing a physical relationship.

$$P_d = f(N, P) \qquad (1)$$

(where $P_d$ is a target fuel injection pressure, $N$ is an engine rotation number, and $P$ is an intake air pressure)

Next, in the electronic control unit 10, system parameters on operating states which cannot be actually measured are estimated using Formula (1) showing the numerical formula model, simulation is performed on the basis of the numerical formula model to determine optimal control parameters, a fuel injection pressure required according to a fuel injection amount required by the engine 1 which is obtained from the engine rotation number and the intake air pressure in the electronic control unit 10 provided in the fuel supply device is determined using the determined control parameters, and the pump delivery pressure of the fuel pump 3 is controlled in real time such that the fuel injection pressure becomes a target pressure in all operation conditions.

Specifically, in the present embodiment, the electronic control unit 10 feeds back a detection signal of the fuel pressure sensor 11 arranged just before the injector 8, which is considered to an actual fuel injection pressure, and when a fuel injection time is connected automatically according to the target fuel injection pressure, a microcomputer of the electronic control unit 10 performs calculation of a fuel injection amount correction time and final fuel injection time by using the following relational expressions (2) and (3), and corrects the fuel injection time such that the actual fuel injection pressure coincides with the target fuel injection pressure. Hence, an exhaust state caused by a change in fuel injection pressure can be prevented from deteriorating.

$$T_h = f(P_d) \qquad (2)$$

$$T_i = f(T_p, T_h) \qquad (3)$$

(where $T_h$ is a fuel injection amount correction time, $T_i$ is a final fuel injection time, $T_p$ is a basic fuel injection time, and $P_d$ is a target fuel injection pressure)

As descried above, application of the conventional return type mechanical control was difficult in a fuel supply system in which a target fuel injection pressure changes depending on a fuel temperature, a fuel injection flow rate, etc. Thus, according to this embodiment, there is introduced a variable target fuel injection pressure control method of creating a numerical formula model showing a physical relationship of a fuel supply device obtained from a plurality of actual measurement values by various sensors annexed to the fuel supply device, estimating system parameters on operating states which cannot be actually measured, by using the created numerical formula model, performing simulation on the basis of the numerical formula model to determine optimal control parameters, and determining a fuel injection pressure required according to a fuel injection amount required by the engine which is obtained in an electronic control unit provided in the fuel supply device by using the determined control parameters. Hence, it becomes unnecessary to always set the fuel injection pressure to a high pressure like the conventional system, deterioration of the fuel pump can be prevented, and exhaust air is also improved.

**Claims**

1. A fuel injection pressure control method in a liquefied fuel engine including a fuel supply pipe extending from a fuel tank and having an injector on the distal side thereof, a fuel pump disposed in the fuel supply pipe, and an electronic control unit which controls driving of the injector and the fuel pump, and which pressurizes a liquefied gas fuel stored in the fuel tank by a fuel pump to feed the gas fuel to the injector via the fuel supply pipe and supply the gas fuel to the engine,

   the method comprising:
   creating a numerical formula model showing a physical relationship of the fuel supply device obtained from values of an engine rotation number and an intake air pressure that are actual measurement values by various sensors annexed to the fuel supply device, estimating system parameters on operating states which cannot be actually measured, by using the created numerical formula model, performing simulation on the basis of the numerical formula model to determine optimal control parameters, and

determining a fuel injection pressure required according to a fuel injection amount required by the engine which is obtained in an electronic control unit provided in the fuel supply device by using the determined control parameters.

2. The fuel injection pressure control method in a liquefied fuel engine according to Claim 1, wherein the following relational expression (1) is included in the numerical formula model.

$$P_d = f(N, P) \qquad (1)$$

(where $P_d$ is a target fuel injection pressure, $N$ is an engine rotation number, and P is an intake air pressure)

3. The fuel injection pressure control method in a liquefied fuel engine according to Claim 1 or 2, comprising feeding back a fuel pressure signal from the fuel pressure sensor of the fuel supply device, calculating a deviation between a target fuel injection pressure calculated according to the engine rotation number and the fuel injection pressure and a fuel injection pressure which is actually measured, in the electronic control unit, and performing a fuel injection pressure control such that an actual fuel injection pressure coincides with the target fuel injection pressure, and simultaneously performing correction of a fuel injection time automatically according to the target fuel injection pressure.

4. The fuel injection pressure control method in a liquefied fuel engine according to Claim 3, wherein the following relational expressions (2) and (3) are used when correction of a fuel injection time is performed automatically according to the target fuel injection pressure.

$$T_h = f(P_d) \qquad (2)$$

$$T_i = f(T_p, T_h) \qquad (3)$$

(where $T_h$ is a fuel injection amount correction time, $T_i$ is a final fuel injection time, $T_p$ is a basic fuel injection time, and $P_d$ is a target fuel injection pressure)

FIG.1

**FIG.2**

**EP 2 103 797 A2**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7054725 A
- JP 2001234829 A
- JP 2003232234 A